# EUROPEAN PATENT APPLICATION

(11) **EP 4 530 272 A1**
(43) Date of publication of application: **02.04.2025**
(21) Application number: 23200856.5
(22) Date of filing: 29.09.2023
(51) Int. Cl.: C04B 7/24, C04B 7/26, C04B 7/28, C04B 18/167

(54) **RECYCLING OF CONCRETE**

(71) Applicant: amaTEQ Holding GmbH, 48143 Münster (DE)
(72) Inventor: Kehrmann, Alexander, 48143 Münster (DE)
(74) Representative: Hoffmann Eitle

(57) **Abstract**

The present invention is directed to a process for recycling concrete, wherein the process comprises the steps of:
i) decomposition of concrete by electrodynamic fragmentation;
ii) separation of the mixture obtained in step i) into one or more coarse fractions and a finest fraction with the finest fraction passing through a sieve with openings of size 0.8 mm, preferably 0.4 mm, most preferably 0.2 mm,
iii) optionally using the separated coarse fractions as sand or coarse sand for construction purposes, e.g. for concrete manufacturing, and
iv) using the finest fraction for preparing a composition with hydraulic properties, preferably cement.

The finest fraction obtained in step ii) (cement fines) exhibits hydraulic properties after thermal treatment. Preferably the finest fraction is mixed and/or granulated with other materials before the thermal treatment. The present invention improves the CO₂ footprint of cement production by replacing conventional raw material.

## Description

### Field of the Invention

The present invention is directed to a process for recycling concrete, wherein the process comprises the steps of:
i) decomposition of concrete by electrodynamic fragmentation;
ii) separation of the mixture obtained in step i) into one or more coarse fractions and a finest fraction with the finest fraction passing through a sieve with openings of size 0.8 mm, preferably 0.4 mm, most preferably 0.2 mm,
iii) optionally using the separated coarse fractions as sand or coarse sand for construction purposes, e.g. for concrete manufacturing, and
iv) using the finest fraction for preparing a composition with hydraulic properties, preferably cement.

The coarse fraction(s) obtained in step ii) can be classified into sand, coarse sand, and gravel, and separated into different fractions. Material too coarse for versatile use can be directed back into the decomposition step.

The finest fraction obtained in step ii) (hereafter also referred to as cement fines) exhibits hydraulic properties after thermal treatment. Preferably these cement fines are mixed and/or granulated with other materials before the thermal treatment. The present invention improves the CO₂ footprint of cement production by replacing conventional raw material.

The invention is also directed towards materials that exhibit hydraulic properties after thermal treatment, which materials can reduce the usage of conventional cement and can improve the CO₂ footprint by their use as substitute for cement.

### Background of the Invention

The manufacturing of cement results in high CO₂ emissions. Most of these CO₂ emissions are inevitable due to the nature of the chemical compounds involved.

Therefore, alternative materials with a lower CO₂ footprint find increasing attention, e.g. calcined clay.

After end-uses of waste concrete generally are limited to low grade applications. Deconstruction is followed by mechanical disintegration and the different fractions are used in construction.

The main problem of the prior art is that mechanical crushing of concrete waste does not result in separated high value products like sand, gravel, and cement, but only in different size fractions of more or less the same composition.

Therefore, there is no closed recycling loop for concrete. About 70% of waste concrete is used as roadbed material.

A real recycling of waste concrete would require isolating sand and gravel from the cement matrix.

An approach for better utilization of components of concrete employs a process called electric discharge fragmentation (EDF), electrodynamic fragmentation (EDF) or electric pulse fragmentation(EPF).

Electrodynamic fragmentation involves subjecting materials to high-voltage electric fields that induce electrical stresses, leading to the formation of cracks and fractures within the material.

This technique has been primarily used in mining and mineral processing industries to enhance the liberation of valuable minerals from ores. By fragmenting the material into smaller particles, it becomes easier to extract the desired components. In such an approach, the concrete waste is collected and prepared for the recycling process. This may involve removing any embedded metal, sorting the concrete by type, and reducing the size of large concrete pieces, if necessary.

The prepared concrete waste is subjected to high-voltage electric discharges. This is typically done by placing the concrete between two electrodes and applying a high-voltage electric field across the electrodes.

The high-voltage electric discharges create rapid and intense electrical breakdowns within the concrete material. This generates a series of high-intensity shockwaves, thermal stresses, and micro-cracks that lead to the fragmentation of the concrete.

As the concrete is fragmented by the electric discharges, it breaks into smaller pieces. After the electric discharge process, the fragmented concrete can be separated into different size fractions through sieving or other separation techniques.

The fragmented concrete obtained through electric discharge fragmentation can be used as recycled aggregates for various applications, such as road construction, or other construction purposes.

WO 2019/207108 discloses a process for electrodynamic fragmentation as a continuous process.

Fragmentation of the waste concrete results in sand, coarse sand, gravel and a fine fraction. The energy consumption for the fragmentation of waste concrete is about 2.3 kWh/t (75 J / pulse), which is in the same order of magnitude as for mechanical fragmentation.

WO 2005/044457 discloses a processing reactor and a process for electrodynamic fragmentation.

WO 2013/053066A1 discloses a process for electrodynamic fragmentation. The material to be fragmented is put in a reactor together with a process liquid.

The main disadvantages of the prior art are:
The mechanical fragmentation of waste concrete does not result in the separation of sand or gravel from the cement matrix.

The fragmentation of waste concrete by electrodynamic fragmentation is not cost and energy efficient if the method is used for the complete waste concrete.

Directly heated kilns that have traditionally been employed for cement production are associated with a number of disadvantages as well. These include high dust formation, high costs and failing to meet acceptable emission levels.

### Summary of the Invention

The invention is directed towards a process for recycling concrete, wherein the process comprises the steps of:
i) decomposition of concrete by electrodynamic fragmentation;
ii) separation of the mixture obtained in step i) into one or more coarse fractions and a finest fraction with the finest fraction passing through a sieve with openings of size 0.8 mm, preferably 0.4 mm, most preferably 0.2 mm,
iii) optionally using the separated coarse fractions as sand or coarse sand for construction purposes, e.g. for concrete manufacturing, and
iv) using the finest fraction for preparing a composition exhibiting hydraulic properties, preferably cement.

The coarse fraction(s) obtained in step ii) is/are classified and separated into different fractions, e.g. gravel, coarse sand, and sand.

A part of the coarse fraction(s) obtained in step ii) can be directed back into step i).

In a preferred embodiment the electrodynamic fragmentation is applied only to a specific fraction obtained after mechanical fragmentation of waste concrete, i.e. the fraction <45 mm, preferably <30 mm, most preferably <20 mm, and the coarser fractions are not separated into their components (gravel, coarse sand, sand, and cement), but are used directly in construction, e.g. for roadbed construction.

The material obtained from the electrodynamic fragmentation process is at least in part separated into its constituents and can be used as gravel, coarse sand, or sand. A part of the material can be subjected to a further electrodynamic fragmentation step.

The finest fraction obtained after electrodynamic fragmentation, however, is used for the preparation of a composition with hydraulic properties, preferably cement.

Separation of the finest fraction is done by passing the material through a sieve with openings of size 0.8 mm, preferably 0.4 mm, most preferably 0.2 mm.

Characterization of aggregates is done by ISO 3310 (part 1 to 3) .

Ordinary Portland cement, which is the most common type of cement used in construction, typically has a molar Ca/Si ratio of around 3.3 equivalent to a Ca/Si mass ratio of around 4.7. For sand the Ca/Si ratio typically is close to 0.

Ordinary concrete with about 50% of sand exhibits a Ca/Si mass ratio of about 0.8.

An ideal separation of the constituents of concrete would shift the Ca/Si mass ratio of 0.8 (in concrete) to a Ca/Si mass ratio of 4.7 for the completely separated cement matrix in the finest fraction. Of course, in reality the Ca/Si ratio in the finest fraction is well below 4.7, typically between 1.6 and 3.2.

Preferably, the Ca/Si ratio of the finest fraction is at least 20% higher, more preferably at least 30% higher, even more preferably at least 50% higher, and most preferably at least 100% higher than the Ca/Si ratio of the material entering the electrodynamic fragmentation step.

And preferably the Ca/Si ratio of the finest fraction obtained after the electrodynamic fragmentation step is at least 20% higher, more preferably at least 30% higher, even more preferably at least 50% higher, and most preferably >100% higher than the Ca/Si ratio of the second finest fraction obtained after the electrodynamic fragmentation step.

The Ca/Si mass ratio is determined using tablet specimens by X-ray fluorescence (XRF) according to DIN EN 196-2. The tablet specimens are required in order to achieve a homogeneous distribution of Ca and Si.

Preparation of the tablet is made according to the following procedure:
1 g of the finely ground sample material (particle size < 40 µm) is calcined in a porcelain crucible in a muffle furnace at 1030°C for 10 minutes to release volatile components (e.g. water, organic carbon and carbonates as CO₂, sulfur compounds as SO₂). The "loss on ignition" (LOI) loss on ignition is calculated from the weight loss of the sample that occurs during this process.

The annealed samples are each mixed with 5 g lithium metaborate (for ignition losses > 25% with 2.5 g lithium metaborate and 2.415 g lithium tetraborate) and 25 mg lithium bromide and melted in platinum crucibles in an automatic melting furnace at 1200°C for 20 minutes. During the melting process, the crucibles are swiveled to mix the samples better.

Preferably, the finest fraction obtained in step ii) is granulated and/or dried.

In a preferred embodiment the finest fraction obtained in step ii) (cement fines) is mixed and/or granulated with materials that exhibit hydraulic properties after thermal treatment, which materials improve the CO₂ footprint if used as substitute for cement.

The dried and/or granulated finest fraction can be subjected to a thermal treatment for activation or can be used as raw material for conventional cement production.

The finest fraction may still comprise some sand, resulting in a higher Si content compared to the Si content in ordinary cement. However, a moderately increased Si content is not necessarily a major problem, as this can be compensated in the overall composition of a raw cement mixture.

In a preferred embodiment the cement fines obtained in step ii) are mixed and/or granulated with other materials prior to being subjected to drying or thermal treatment, where those other materials preferably exhibit hydraulic properties after thermal treatment.

In a preferred embodiment the cement fines obtained in step ii) are mixed and/or granulated with slag or slag sand or blast furnace slag obtained as by-product from steelmaking prior to being used in step iv).

In a preferred embodiment the cement fines obtained in step ii) are mixed and/or granulated with fly ash obtained as by-product from steel making, power plants or waste incineration plants prior to being used in step iv).

In a preferred embodiment the cement fines obtained in step ii) are mixed and/or granulated with gypsum obtained as by-product from off-gas purification prior to being used in step iv) .

In a preferred embodiment the cement fines obtained in step ii) are mixed and/or granulated with washed bypass dust from cement manufacturing prior to being used in step iv).

In a preferred embodiment the dried cement fines obtained in step ii) or the mixture comprising dried cement fines is put into a cement kiln together with raw mix for cement in step iv) .

A further solution to the prior art problems involves the use of a unit for the treatment of cement fines or a composition comprising cement fines, wherein the unit comprises:
an indirect-fired rotary multi-zone thermal reactor with at least two different temperature zones,
a pre-treatment duct,
a vapour recovery unit comprising a water condensing unit comprising a water-based ejector style scrubber, a water cooling and circulation assembly and a water collection tank.

An additional solution to the prior art problems is represented by a process for the treatment of cement fines or a composition comprising cement fines, wherein the process comprises the following steps:
a. Addition of cement fines or a composition comprising cement fines as a feed material into an indirect-fired rotary thermal reactor, wherein the indirect-fired rotary thermal reactor is a multi-zone reactor with at least two different temperature zones;
b. Heating the feed material in each of the temperature zones, wherein:
   a. in a first zone, the temperature is set to 93-149 °C; and
   b. in a second zone, the temperature is set to 750-950 °C;
c. Passing the flue gas from the thermal reactor through a pre-treatment duct, and
d. Passing the exhaust vapour from the pre-treatment duct through a vapour recovery unit comprising a water-based ejector style scrubber, a water cooling and circulation assembly, and a water collection tank.

The solutions to the prior art problems are associated with a number of advantageous effects. These include, but are not limited to, the following:
1. Providing a unit / process for the treatment of cement fines or a composition comprising cement fines on a commercial scale.
2. Improvement in energy efficiency.
3. Efficient and low-cost off-gas treatment system.

### Detailed Description

Embodiments according to the present invention will now be described in more detail.

The present invention uses a finest fraction (cement fines) formed by the decomposition of concrete for producing a composition with hydraulic properties. This may be done by using an indirect-fired rotary multi-zone thermal reactor for the treatment of cement fines or a composition comprising cement fines.

In one embodiment the process according to the present invention involves the use of a unit for the treatment of cement fines or a composition comprising cement fines that comprises:
an indirect-fired rotary multi-zone thermal reactor with at least two different temperature zones,
a pre-treatment duct, and
a vapour recovery unit comprising a water-based ejector style scrubber, a water cooling and circulation assembly, and a water collection tank.

In one embodiment, the disassembled unit for the treatment of cement fines or a composition comprising cement fines can be made mobile as the parts fit into a series of shipping containers. This has the advantage that the unit is easily transported to/from a specific job site.

### Indirect-fired rotary thermal reactor

In indirect-fired rotary thermal reactors, heat is introduced to the outside of a drum containing the material to be treated. The heat source is not particularly limited, but can include an electrical furnace or a source of combustible materials, such as natural gas, waste gas or fuel. Preferably, the heat source is an electrical furnace. This has the advantage of improving the mobility of the unit.

Advantages of the reactor being indirect-fired and rotary include avoiding direct contact between the heat source and the material, providing a better control of the temperatures and allowing the control of the internal processing atmosphere. Electricity as a heat source opens the possibility of using CO₂-free energy for the thermal treatment, thereby resulting in an even better CO₂ footprint of the products.

In a preferred embodiment a significant overcapacity of equipment is installed, and said equipment is operated merely part-time. Thus, consumption of electricity can be shifted to the most favorable times.

For example, the electrically heated reactor may be designed with 200% of nameplate (or nominal) capacity and operated for 50% of the time only. This allows balancing supply and demand of electricity in such a way that high consumption of electricity is activated in times of oversupply (sunny and windy periods and low demand of electricity) and low consumption of electricity is established in times of shortage of electricity (dark and windless periods and high demand of electricity).

The advantages of lower cost for electricity generally overcome the higher investment for the higher nameplate capacity.

In a further embodiment, the feed material enters the system at ambient temperature.

In an embodiment, the reactor can be heated up to 1200 °C. Preferably the material is heated at temperatures of from 750 °C to 950 °C. These temperatures are the temperatures of the reactor wall, which may differ from the temperature of the material.

The term temperature zone refers to a section of the reactor in which the energy input can be controlled independently of adjacent sections and wherein the amount of thermal energy supplied per unit surface area of the reactor is kept constant throughout the temperature zone (variation of less than 10%, preferably less than 5%).

It is possible for there to exist sections of the reactor that are not temperature zones, e.g. non-heated sections.

In a preferred embodiment, the retention time of the material in the heated zones of the reactor is at least 30 minutes.

According to a preferred embodiment of the invention, the indirect-fired rotary thermal reactor is an indirect-fired rotary multi-zone thermal reactor with at least two heat zones.

The reactor is an indirect-fired rotary multi-zone thermal reactor with at least two heat zones (temperature zones). Preferably, the temperature(s) in the initial zone(s) is/are set to vaporise free water, and the temperature (s) of the later zone(s) is set to vaporise crystal water. An advantage of using a multi-zone system is that it allows the reactor temperature to increase along with the material moving through the reactor in a continuous process.

The unit can be used for the treatment of cement fines or a composition comprising cement fines.

### Example:

50% of the material entering the fragmentation step is not fragmented and 50% is fragmented in such way that a complete separation of sand and the cement phase is achieved, the result is 75% of a coarse fraction (consisting of 50% of not fragmented material and 25% of pure sand) and 25% of a fine fraction (consisting of pure cement).

The mass ratio of Ca/Si in the coarse fraction is 0.40, and the mass ratio of Ca/Si in the fine fraction is 4.7.

Thus, the Ca/Si ratio of the finest fraction (4.7), as determined according to DIN EN 196-2, is nearly 500% higher than the Ca/Si ratio of the material entering the electrodynamic fragmentation step (0.8).

## Claims

1. Process for recycling of concrete, wherein the process comprises the steps of:
i) decomposition of concrete by electrodynamic fragmentation;
ii) separation of the mixture obtained in step i) into one or more coarse fractions and a finest fraction with the finest fraction passing through a sieve with openings of size 0.8 mm, preferably 0.4 mm, most preferably 0.2 mm,
iii) optionally using the separated coarse fractions as sand or coarse sand for construction purposes, e.g. for concrete manufacturing, and
iv) using the finest fraction for preparing a composition with hydraulic properties, preferably cement.

2. Process according to claim 1, wherein the electrodynamic fragmentation is achieved by means of shock waves that are generated by electric discharges or by a generator of ultrasonic sound.

3. Process according to claim 1, wherein the coarse fraction(s) obtained in step ii) is/are classified and separated into different fractions.

4. Process according to claim 1, wherein a part of the coarse fraction (s) obtained in step ii) is directed back into step i) .

5. Process according to any one of claims 1 to 4, wherein the concrete material that is subjected to electrodynamic fragmentation is the fraction <45 mm, preferably <30 mm, most preferably <20 mm that is obtained after mechanical fragmentation of concrete.

6. Process according to any one of claims 1 to 5, wherein all other fractions except the fines fraction obtained from the electrodynamic fragmentation process are used as coarse sand or sand, or are used for a further electrodynamic fragmentation step, and the finest fraction is used for preparation of a composition with hydraulic properties, preferably cement.

7. Process according to any one of claims 1 to 6, wherein the Ca/Si ratio of the finest fraction, as determined according to DIN EN 196-2, is >20%, preferably >30%, more preferably >50%, most preferably >100% higher than the Ca/Si ratio of the material entering the electrodynamic fragmentation step.

8. Process according to any one of claims 1 to 7, wherein the Ca/Si ratio of the finest fraction obtained after the electrodynamic fragmentation step, as determined according to DIN EN 196-2, is >20%, preferably >30%, more preferably >50%, most preferably >100% higher than the Ca/Si ratio of the second finest fraction obtained after the electrodynamic fragmentation step.

9. Process according to any preceding claim, wherein the finest fraction obtained in step ii) is granulated and/or dried.

10. Process according to claim 9, wherein the dried and/or granulated finest fraction is subjected to a thermal treatment.

11. Process according to claim 10, wherein the thermal treatment is undertaken in an indirect-fired rotary thermal reactor having at least two temperature zones and includes the following steps:
heating the feed material in each of the temperature zones, wherein:
a. in a first zone the temperature is set to 93-149 °C; and
b. in a second zone the temperature is set to 750-950 °C;
passing the flue gas from the thermal reactor through a pre-treatment duct, wherein the pre-treatment duct comprises a water spray and the velocity of the spray is at least 50 m/s; passing the exhaust vapour from the pre-treatment duct through a vapour recovery unit comprising a water-based ejector style scrubber, a water cooling and circulation assembly, and a water tank; wherein condensed liquid from the water-based ejector style scrubber enters the water collection tank.

12. Process according to any one of claims 10-11, wherein the finest fraction is pre-dried prior to entering the thermal treatment step.

13. Process according to any one of claims 9-12, wherein the finest fraction is mixed and/or granulated with other materials prior to entering the drying step or the thermal treatment step, where those other materials preferably exhibit hydraulic properties after thermal treatment.

14. Process according to any claim 13, wherein the finest fraction obtained in step ii) is mixed and/or granulated with one or more selected from the group comprising slag or slag sand or blast furnace slag obtained as by-product from steelmaking, fly ash obtained as by-product from steel making, power plants or waste incineration plants, gypsum obtained as by-product from off-gas purification, and washed bypass dust from cement manufacturing prior to being used in step iv).

15. Process according to any one of claims 9-14, wherein, in step iv), the finest fraction obtained in step ii) is dried and put into a cement kiln together with raw mix for cement in step iv) .
